(19) Europäisches Patentamt
European Patent Office
Office européen des brevets

(11) Veröffentlichungsnummer: **0 116 846**
**B1**

(12) # EUROPÄISCHE PATENTSCHRIFT

(45) Veröffentlichungstag der Patentschrift: **23.09.87**

(21) Anmeldenummer: **84100375.9**

(22) Anmeldetag: **16.01.84**

(51) Int. Cl.⁴: **C 08 G 18/38**, C 08 G 18/50, C 09 D 3/72, C 08 L 75/04, C 09 D 5/18

(54) **Intumeszenzeigenschaften aufweisende Konstruktionselemente aus Intumeszenzwerkstoffen und die Verwendung von Intumeszenzwerkstoffen zur Herstellung von Beschichtungen.**

(30) Priorität: **26.01.83 DE 3302416**

(43) Veröffentlichungstag der Anmeldung: **29.08.84 Patentblatt 84/35**

(45) Bekanntmachung des Hinweises auf die Patenterteilung: **23.09.87 Patentblatt 87/39**

(84) Benannte Vertragsstaaten: **AT BE DE FR GB IT NL SE**

(56) Entgegenhaltungen:
**EP-A-0 043 952**
**EP-A-0 051 106**
**EP-A-0 061 024**
**FR-A-1 325 195**
**US-A-3 396 129**

**R. VIEWEG et al.: "Polyurethane", Band VII von Kunststoff-Handbuch, 1966, Carl Hanser Verlag, München, DE.**

(73) Patentinhaber: **BAYER AG, Konzernverwaltung RP Patentabteilung, D-5090 Leverkusen 1 Bayerwerk (DE)**

(72) Erfinder: **von Bonin, Wulf, Dr., Mendelssohnstrasse 30, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 116 846 B1

LIBER, STOCKHOLM 1987

**Beschreibung**

Die vorliegende Erfindung bezieht sich auf wasserbeständige Konstruktionselemente und Beschichtungen mit Intumeszenzwirkung für den vorbeugenden Brandschutz auf Basis intumeszierender Werkstoffe.

Intumeszenzmassen sind bekanntlich Materialien, die bei Einwirkung von Feuer und Hitze aufschäumen und dabei einen isolierenden und feuerabweisenden Schaum ausbilden, der die rückwärtigen Bezirke vor der Feuereinwirkung schützt. Solche Intumeszenzmassen sind bekannt (DE-OS 30 41 731 (& EP-A-51 106), DE-OS 31 09 352 (& EP-A-61 024)).

Als Konstruktionselemente mit Intumeszenzwirkung für den vorbeugenden Brandschutz werden solche Konstruktionselemente verstanden, deren Brandschutzwirkung darin besteht, daß sie im Brandfalle durch die Erhitzung unter Ausbildung eines feuerabweisenden und isolierenden Schaumes expandieren, dadurch im Brandfalle oftmals auftretende Verwerfungen, Ritzen und Fugen, Spalte usw. gegen den Durchtritt von Rauch und Flammen bzw. Flammengasen verschließen und die rückwärtigen, dem Feuer abgewandten Teile gegen den Zugriff des Feuers abschirmen.

Als solche Konstruktionselemente werden hier beispielsweise bezeichnet: Wandverkleidungen, Behälterabdeckungen, Umkleidungen für Rohre und Träger, Wandelemente, Sicherheitsgehäuse, in Fugen eingebaute oder in sie eingelegte oder eingedrückte Profile, Dichtungselemente, Halbzeuge und Formteile für spezielle geometrisch fallweise verschiedenartige Ausformungen von Sicherungsvorrichtungen, Sandwiches, bzw. einzelne Bestandteile von Verbundwerkstoffen in Plattenform, Pfropfen, Verschlußelemente.

Vorzugsweise handelt es sich um Konstruktionselemente aus mehr oder weniger harten, halogenfreien, selbsttragenden Intumeszenzwerkstoffen, die massiven, porösen oder schaumstoffartigen Charakter haben können.

Die bisher zur Herstellung solcher Konstruktionselemente eventuell geeigneten harten Intumeszenzmaterialien haben den Nachteil der mangelnden Wasserbeständigkeit.

Bei den bisherigen intumeszierenden Werkstoffen handelte es sich um Mischungen von mehreren Komponenten, z. B. um einen zumeist phosphorhaltigen Säurespender, um ein die Ausbildung des Schaumes bewirkendes, bzw. verbesserndes Carbonific, zumeist einen Polyalkohol und um ein Treibmittel, zumeist ein Ammoniumsalz oder auch sonstige Stickstoff enthaltende Verbindungen.

Gemische dieser Komponenten, gegebenenfalls mit weiteren Hilfsmitteln, wurden als Pulvermischungen, granuliert oder mit Bindemitteln versehen, bisher als Intumeszenzmassen eingesetzt. Auch Alkalisilikate mit bei Beflammung verdampfenden Wasseranteilen wurden für diesen Zweck benutzt, d.h. als Intumeszenzmassen für den vorbeugenden Brandschutz eingesetzt.

Abgesehen von gewissen nur unter erheblichen unerwünscht aufwendigen Vorsichtsmaßnahmen herzustellenden, auch als Intumeszenzmittel wirkenden Nitroaromaten sind die bekannten Intumeszenzmassen der Praxis bei zufriedenstellender Wirksamkeit teilweise hygroskopisch, teilweise luftempfindlich und wasserempfindlich. Daher sind sie selbst dann, wenn sie mit relativ wasserbeständigen Bindemitteln zusammen verarbeitet werden, nicht wasserbeständig und können nur da zum Einsatz gelangen, wo kein fließendes Wasser auftreten kann, oftmals muß sogar ein Schutz gegen Luft- und Luftfeuchtigkeitszutritt vorgenommen werden.

Andererseits besteht im Schiffbau, Fahrzeugbeu, Hochbau, Tiefbau und im Bereich der Elektrotechnik ein erheblicher Bedarf an wasserbeständigen Intumeszenzmassen.

Diesem Bedürfnis trägt die vorliegende Erfindung Rechnung. Sie beruht auf dem überraschenden Befund, daß sich wasserbeständige Konstruktionselemente mit Intumeszenzwirkung für Zwecke des vorbeugenden Brandschutzes herstellen lassen, die über eine hervorragende Wasserbeständigkeit verfügen, wenn man als Intumenszenzwerkstoffe solche Umsetzungsprodukte verwendet, die erhalten werden, wenn man Polyisocyanate mit oftmals wasserlöslichen, mindestens zwei Hydroxylgruppen aufweisenden phosphorhaltigen Kondensationsprodukten, wie sie z. B. durch Kondensation von gegebenenfalls OH-Gruppen enthaltenden primären oder sekundären aliphatischen, cycloaliphatische, aromatischen, araliphatischen oder heterocyclischen Mono- und/oder Polyaminen, Carbonylverbindungen und Dialkylphosphiten, gegebenenfalls unter unter Mitverwendung von Cyanursäure oder vorzugsweise Cyanursäureabkömmlingen und gegebenenfalls weiteren, gegenüber dem Reaktionsgemisch inerten Hilfs- und Zusatzstoffen, in offenen oder geschlossenen Formen umsetzt.

Die reinen derartigen Umsetzungsprodukte, die vorzugsweise noch Cyanursäureabkömmlinge und weitere Zusatzstoffe enthalten können, wobei der Zusatz von Melamin und/oder seinen Salzen bevorzugt vorgenommen wird, während der Zusatz der weiteren inerten Zusatzstoffe z. B. von Farbstoffen, Treibmitteln, Füllstoffen usw. in Bezug auf den Erfindungsgegenstand lediglich ergänzenden Charakter hat, stellen massive bis schaumstoffartige Produkte mit überraschend gutem Intumeszenzverhalten und guter Wasserbeständigkeit dar, ohne daß weitere Komponenten zugemischt werden müßten, was als erheblicher technischer Vorteil zu sehen ist.

Gegenstand der vorliegenden Erfindung sind Konstruktionselemente mit gegen die Einwirkung von Wasser ausgezeichnet beständigen Intumeszenzeigenschaften für den vorbeugenden Brandschutz auf Basis intumeszierender Werkstoffe, hergestellt unter Formgebung in offenen oder geschlossenen Formen unter Verwendung von Intumeszenzwerkstoffen, die erhalten werden durch Umsetzung von

1.) Polyisocyanaten mit

2.) mindestens zwei Hydroxylgruppen aufweisenden phosphorhaltigen Kondensationsprodukten, erhältlich

durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und gegebenenfalls

3.) Cyanursäure und/oder Cyanursäurederivaten, gegebenenfalls

4.) in Gegenwart von gegenüber dem Reaktionsgemisch inerten Hilfs- und Zusatzstoffen.

Erfindungsgemäß bevorzugt sind Konstruktionselemente, erhalten unter Verwendung von Intumeszenzwerkstoffen aus solchen Polyisocyanaten 1), wie sie durch Anilin-Formaldehyd-Kondensation und anschließende Phosgenierung erhalten werden, sowie solche Konstruktionselemente bei denen zur Herstellung der Intumeszenzwerkstoffe als mindestens zwei Hydroxylgruppen aufweisende Kondensationsprodukte 2) solche der Formel

$$(RO)_2PO\text{-}CH_2\text{-}N{=}(CHX\text{-}CHX\text{-}OH)_2$$

in der
$R = C_1$-$C_8$-Alkyl oder $C_1$-$C_8$-Hydroxyalkyl und
$X =$ H oder Methyl bedeuten,
verwendet werden.

Als Cyanursäurederivate werden bevorzugt Melamin und/oder seine Phosphate und/oder wasserunlösliche Melamin-Formaldehydkondensate verwendet.

Die verwendeten Intumeszenzwerkstoffe weisen vorzugsweise Raumgewichte von 0,1 bis 1,0 g/$cm^3$ auf.

Gegenstand der vorliegenden Erfindung ist ferner die Verwendung von Intumeszenzwerkstoffen, erhalten durch Umsetzung von

1. Polyisocyanaten mit

2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und gegebenenfalls

3. Cyanursäure und/oder Cyanursäurederivaten, gegebenenfalls

4. in Gegenwart von gegenüber dem Reaktionsgemisch inerten: Hilfs- und Zusatzstoffen zur Herstellung von Konstruktionselementen mit gegen die Einwirkung von Wasser ausgezeichnet beständigen Intumeszenzeigenschaften für den vorbeugenden Brandschutz unter Formgebung in offenen oder geschlossenen Formen.

Die Erfindung betrifft ferner die Verwendung von Intumeszenzwerkstoffen, erhalten durch Umsetzung von

1.) Polyisocyanaten mit

2.) mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und gegebenenfalls

3.) Cyanursäure und/oder Cyanursäurederivaten, gegebenenfalls

4.) in Gegenwart von gegenüber dem Reaktionsgemisch inerten Hilfs- und Zusatzstoffen

zur Herstellung von Beschichtungen mit gegen die Einwirkung von Wasser ausgezeichnet beständigen Intumeszenzeigenschaften für den vorbeugenden Brandschutz.

Im folgenden wird die Herstellung der erfindungsgemäß zu verwendenden Intumeszenzwerkstoffe beispielhaft erläutert:

Im einfachsten Falle werden sie durch Vermischen und Reaktion von Polyisocyanaten mit den vorgenannten Kondensationsprodukten gegebenenfalls unter Mitverwendung von Katalysatoren auf Basis z. B. von Aminen, Phosphorvverbindungen oder metallorganischen Verbindungen, wie sie dem Fachmann geläufig sind, in offenen oder geschlossenen Formen hergestellt oder die Umsetzungsprodukte werden nach der Herstellung durch spanabhebende Bearbeitung in die gewünschte Form gebracht. Eine Herstellung z. B. als Verfüllungsmaterial vor Ort zur Erzielung der gewünschten Ausbringungsform in situ ist ebenfalls in Betracht zu ziehen, mit oder ohne Zufuhr von Hilfsgas oder Wärme.

Das Mischungsverhältnis ist in Bezug auf die Reaktion des Polyisocyanates mit den korrespondierenden Gruppen des Kondensationsproduktes zweckmäßigerweise annähern stöchiometrisch zu wählen, hierbei sollten gegebenenfalls im Kondensationsprodukt enthaltene Anteile an Wasser mit berücksichtigt werden. Falls eine weniger gute Wasserbeständigkeit des Intumeszenzwerkstoffes in Kauf genommen werden kann, ist es auch möglich, mit weniger als der stöchiometrischen Isocyanatmenge zu arbeiten, sie sollte aber zweckmäßigerweise 50 Mol-% der stöchiometrisch nötigen Isocyanatmenge nicht unterschreiten. Zur Erzielung spezieller Effekte, z. B. zum Zwecke einer gewünschten weiteren Reaktionsfähigkeit des Intumeszenzmaterials, höherer Vernetzungsmöglichkeit oder verbesserter Kombinierbarkeit mit weiteren Bestandteilen der Konstruktionselemente oder auch um spätere Härtungsreaktionen der Intumeszenzwerkstoffe zu ermöglichen, kann auch die stöchiometrisch notwendige Isocyanatmenge überschritten werden, wobei im allgemeinen 100 Mol-% der stöchiometrisch notwendigen Isocyanatmenge nicht überschritten werden, obgleich auch höhere

Isocyanatmengen in speziellen Fällen in Betracht zu ziehen sind.

Für die Herstellung der Intumeszenzwerkstoffe für die erfindungsgemäßen Konstruktionselemente können eingesetzt werden:

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q\,(NCO)_n$$

in der

n = 2-4, vorzugsweise 2,

und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen,
bedeuten, z. B. Ethylen-diisocyanat, 1,4-Tetra-methylen-diisocyanat, 1,6-Hexamethylen-diisocyanat, 1,12-Dodecan-diisocyanat, Cyclobutan-1,3-diisocyanat, Cyclohexan-1,3- und -1,4-diisocyanat sowei beliebige Gemische dieser Isomeren, 1-Isocyanato-3,3,5-tri-methyl-5-isocyanatomethyl-cyclohexan (DE-Auslegeschrift 1 202 785, US-Patentschrift 3 401 190), 2,4- und 2,6-Hexahydrotoluylen-diisocyanat sowie beliebige Gemische dieser Isomeren, Hexahydro-1,3-und/oder -1,4-Phenylen-diisocyanat, Perhydro-2,4'-und/oder -4,4'-diphenylmethan-diisocyanat, 1,3- und 1,4-Phenylen-diisocyanat, 2,4- und 2,6-Toluylen-diisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenylpolymethylen-polyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 250 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentschrift 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 694 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls, gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z. B. das 2,4- und 2,6-Toluylendiisocyanat sowie beliebige Gemische dieser Isomeren ("TDI"), insbesondere Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylen-diisocyanat bzw. vom 4,4'- und/oder 2,4'-Diphenylmethan-diisocyanat ableiten. Monoisocyanate können anteilig (bis zu höchstens 20 Gew.-%, bezogen auf Polyisocyanat) mitverwendet werden.

2. Mindestens zwei Hydroxylgruppen aufweisende phosphorhaltige Kondensationsprodukte, wie sie z. B. durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, erhalten werden können. Derartige Kondensationsprodukte sind an sich bekannt, z. B. aus der DE-PS 1 143 022, US-PS 3 076 010, DE-AS 1 803 747 und DE-AS 1 928 265.

Erfindungsgemäß bevorzugt sind mindestens zwei Hydroxylgruppen aufweisende phosphorhaltige Kondensationsprodukte der Formel

$(RO)_2\text{-}PO\text{-}CH_2\text{-}N=(CHX\text{-}CHX\text{-}OH)_2$

in der
R = $C_1$-$C_8$-Alkyl oder $C_1$-$C_8$-Hydroxyalkyl, vorzugsweise Ethyl oder Hydroxyethyl, und
X = H oder Methyl, vorzugsweise H, bedeuten.

Eine anteilige Mitverwendung von weniger als 2 Hydroxylgruppen aufweisenden Kondensationsprodukten ist gegebenenfalls in Betracht zu ziehen.

3. Gegebenenfalls, aber doch bevorzugt Cyanursäure und/oder ihre Derivate d.h. Cyanursäure bzw. Verbindungen, die sich als Cyanursäure- bzw. Isocyansäureabkömmlinge verstehen lassen. Solche sind z. B. Cyanamid, Dicyanamid, Hydrazodicarbonamid, Dicyandiamid, Dicyandiamin, Guanidin und deren Salze, Biguanid, Urazol, Urazolcyanurat, Melamincyanurat, Cyanursäuresalze und Cyanursäureester und -amide, insbesondere Melamin und seine Salze, das wegen seiner guten Zugänglichkeit bevorzugt wird.

Als Melamin wird vorzugsweise der Grundkörper 2,4,6-Triamino-s-Triazin verstanden, es sind jedoch auch z. B. dessen durch thermische Behandlung oder Umsetzung mit Formaldehyd erhältlichen Kondensationsprodukte in Betracht zu ziehen.

Gemäß Erfindung werden hier auch Guanidin, Cyanamid, Allophanat, Biuret, Dicyandiamid, deren Polykondensationsprodukte und vorwiegend deren wasserunlösliche Formaldehydkondensationsprodukte miterfaßt.

Aus Gründen der guten Zugänglichkeit bei guter Unempfindlichkeit gegen Wasser wird vorzugsweise Melamin als Cyanursäureabkömmling verwendet. Als Cyanursäurederivate kommen auch Salze in Frage.

Die Salzbildung kann bei sauren Cyanursäureabkömmlingen durch basische Komponenten wie Ammoniak, Amine, Alkali-, Erdalkali-, Erdmetallionen oder sonstige anorganische und organische Basen erfolgen, bei basisch reagierenden Cyanursäureabkömmligen kann sie mit organischen oder anorganischen sauren Komponenten durchgeführt werden, wie z. B. Trimellitsäure, Pyromellitsäure, Malonsäure, Citronensäure, Oxalsäure, Trichloressigsäure, HCl, Schwefelsäuren, Sulfonsäuren, Salpetersäure, Borsäure insbesondere aber mit Säuren auf Phosphorbasis, z. B. Orthophosphorsäure und deren verschiedene Dehydratisierungsprodukte, Phosphorigesäure, Phosphonsäuren usw.

Die Salzbildung kann stöchiometrisch, überstöchiometrisch oder vorzugsweise unterstöchiometrisch erfolgen, z. B. in dem auf ein Mol Melamin weniger als ein Mol Orthophosphorsäure zur Salzbildung verwendet werden.

Erfindungsgemäß sind häufig Salze von Melamin mit Säuren des Phosphors bevorzugt.

Von besonderem Interesse sind Phosphate vom Melaminphosphat-Typ. Unter diesen werden vorzugsweise Umsetzungsprodukte aus 1 Mol Melamin mit 0,01 bis 2,5, vorzugsweise 0,5 bis 1,0 Mol ortho-Phosphorsäure verstanden. Es können aber auch andere Phosphorsäuren, wie etwa Meta- oder Pyrophosphorsäure oder solche mit anderen Wertigkeitsstufen des Phosphors in Betracht gezogen werden. Die Herstellung der Phosphate geschieht z. B. durch Umsetzung von Melamin mit $H_3PO_4$ in wäßriger Suspension, bei 10 - 120°C, abkühlen, filtrieren und trocknen. Mischungen von Melamin mit Melaminphosphaten hohen Gehaltes an Phosphorsäure können an Stelle von Melaminphosphaten mit niedrigem Phosphorsäuregehalt verwendet werden.

Im generellen erfindungsgemäßen Verständnis werden hier aber auch solche Phosphate als "Phosphate vom Melaminphosphat-Typ" bezeichnet, die sich als im Wasser unter 5 Gew.-%, vorzugsweise unter 1 Gew.-% löslich (in Form der gesättigten Lösung bei Raumtemperatur) erweisen und gegebenenfalls durch Addition von Phosphorsäuren an Verbindungen entstehen, die als Cyanursäureabkömmlinge zu bezeichnen sind, z. B. an Cyanamid, Dicyanamid, Hydrazodicarbonamid, Dicyandiamin, Dicyandiamid, Guanidin, Biguanid, Urazol, Urazolcyanurat, Melamincyanurat, Cyanursäuresalze und Cyanursäureester und -amide, vernetzte oder unvernetzte Formaldehydkondensate von Harnstoff, Melamin, Dicyandiamid, Guanidin.

In Bezug auf die verwendeten Mengen an Polyisocyanat und phosphorhaltigem Kondensationsorodukt werden Cyanursäure oder ihre Abkömmlinge in Mengen von 0 bis 300 Gew.-%, vorzugsweise in Mengen von 0 bis 70 Gew.-%, eingesetzt.

Bei den gegebenenfalls mitzuverwendenden inerten Hilfs- und Zusatzstoffen kann es sich z. B. um Farbstoffe bzw. Farbpigmente, Füllstoffe auf natürlicher oder synthetischer organischer oder anorganischer Basis mit massivem, porösem, hohlem, kristallinem, amorphen, pulverigem, kugeligem oder faserförmigen Erscheinungsbild mit oder ohne Hydrat- bzw. Kristallwasser, z. B. Kohlenstoff, Kieselsäure, Silikate, Carbonate, Al-Oxyde, Gläser, Hohlkügelchen, Mineralfasern, Asbest, Metallpulver, Gips, Aramidpulver und -Fasern, Phenolharze, Furanharze und Eisenoxyde handeln.

Die Einsatzmenge dieser gegebenenfalls mitzuverwendenden Zusatzstoffe liegt zwischen 0 und 800 Gew.-%, vorzugsweise zwischen 0 und 200 Gew.-%, bezogen auf die verwendeten Mengen an Polyisocyanat und phosphorhaltigem Kondensationsprodukt.

Die Intumeszenzwerkstoffe für die Konstruktionselemente gemäß Erfindung mit gegen Wasser ausgezeichnet beständigen Intumeszenzeigenschaften können massiv oder porig bzw. schaumstoffartig sein. Sie haben Dichten zwischen durchschnittlich etwa 0,03 und 1,8, vorzugsweise 0,1 und 1,0, insbesondere 0,2 und 0,8 g/m$^3$.

Die erfindungsgemäßen Konstruktionselemente können ausschließlich aus den vorbeschriebenen Intumeszenzwerkstoffen bestehen, vorzugsweise können sie aber auch Werkstoffkombinationen darstellen

und/oder sonstige Montage- oder Beschichtungshilfs- und Zusatzmittel zu Zwecken der speziellen Einsatzgebieten angepaßten Verarbeitbarkeit bzw. Anwendbarkeit, z. B. Verstärkungselemente oder/und Trägersubstrate enthalten.

Bei der Herstellung von solchen Konstruktionselementen durch Formgebung in offenen oder geschlossenen Formen kann kontinuierlich oder diskontinuierlich gearbeitet werden.

Die Herstellung kann durch Vermischen der Komponenten bzw. bereits vorgemischter Komponentengemische vor Ort geschehen, wobei die Reaktionsmischung maschinell oder per Hand in z. B. zu verschließende Öffnungen bzw. beheizte oder unbeheizte Formen drucklos oder unter Druck eingegossen wird, wo sie dann aufschäumen bzw. aushärten kann. Die Mischung kann bei entsprechender technischer Ausrüstung auf die zu schützenden Substrate und Untergründe aufgesprüht, aufgestrichen oder aufgegossen werden. Es ist auch in Betracht zu ziehen, daß man zunächst Halbzeuge, z. B. Schaumstoffe oder Profile herstellt und diese dann in technisch erforderlicher Weise weiterverarbeitet, z. B. durch Schneiden, Verpressen, Stanzen durch Warmverformen bei ca. 110 - 250°C, Verschweißen und Verkleben.

Durch Kombination der Intumeszenzwerkstoffe mit geschäumten oder massiven anorganischen oder organischen Zuschlagstoffen, wie z. B. Polystyrolschaum, Polyurethanschaum, Phenoplasten, Aminoplasten oder Kies oder Blähton, Harnstoff- oder Phenolharzschäumen, Schaumglas, Glasfasern, Holz, Mineralwolle, Bims usw., können als Konstruktionselemente auch Verbunde mit speziellen Intumeszenzeigenschaften erhalten werden. Die Herstellung von mit Fasern oder Drähten bzw. Geweben, Strängen oder Vliesen aus organischen oder anorganischen Materialien verstärkten Konstruktionselementen oder ihre Verwendung als Bestandteile in Mehrschicht- bzw. Sandwichaufbauten sind ebenfalls in Betracht zu ziehen; ebenso die Kombination mit anderen Intumeszenzmaterialien auf organischer oder anorganischer Basis.

Die erfindungsgemäßen Konstruktionselemente zeichnen sich dadurch aus, daß sie ihre Intumeszenzeigenschaften auch bei Einwirkung von fließendem Wasser nicht verlieren. Im allgemeinen beginnen sie bei Temperaturen oberhalb von 200°C, insbesondere oberhalb 300°C, aufzuschäumen. In der Flamme expandieren sie um 100 bis über 1 000 Vol-%, je nach Zusammensetzung und Art der Erhitzung. Sie sind vorzugsweise halogenfrei formulierbar und können oftmals schwer entflammbar eingestellt werden.

Die erfindungsgemäßen Konstruktionselemente finden insbesondere dort Verwendung, wo eine Maßnahme des vorbeugenden Brandschutzes durch Verschalung, Abtrennung, Auskleidung, Ausfüllen oder Abdichten von Hohlräumen bzw. Bauteilen im Bereich des Hochbaus, Tiefbaus, der Elektrotechnik, des Fahrzeug-, Maschinen- oder Anlagenbaus vorgenommen werden soll und mit dem Auftreten von Schwitzwasser, Anmachwasser für Mörtel oder Zemente, Kondenswasser, Regenwasser oder Grundwasser zu rechnen ist.

Bei der Herstellung von Konstruktionselementen mit Beschichtungen aus den genannten Intumeszenzwerkstoffen wird auch von fließfähigen Zubereitungen (klare molekulare oder kolloide Lösungen, Dispersionen oder Emulsionen), die vorzugsweise filmbildende Eigenschaften aufweisen sollen, ausgeganen. Hierzu werden in der Regel Lösungsmittel mitverwendet, z. B. Chlorkohlenwasserstoffe wie Methylenchlorid, Chloroform, Trichlorethylen, Chlorbenzol, Ketone, wie Aceton, Methylethylketon, Cyclohexanon, Aromaten wie Toluol, Xylol, Anisol, Ester wie Essigester, Methylglykolacetat, Butylacetat, Diethylenglykolbisacetat und andere bekannte Lösungsmittel. Auch Lösungsmittelgemische kommen in Frage.

Die Lösungsmittel können vollständig oder anteilig schon bei der Herstellung der zu lösenden Polyisocyanat-Umsetzungsprodukte (Intumeszenzwerkstoffe) oder danach zur Auflösung derselben eingesetzt werden. Vor allem im letzteren Fall ist auch mi OH-haltigen Lösungsmitteln wie Alkoholen oder Wasser zu rechnen, insbesondere, wenn Anstrichdispersionen hergestellt werden sollen mit möglichst geringen Anteilen an organischen Lösungsmitteln. Hier kann auch ein Einsatz wässriger Säuren oder Basen, wie Essigsäure oder Ammoniak in Betracht gezogen werden.

Es ist auch in Betracht zu ziehen, daß die Umsetzung des Polyisocyanates zunächst in Gegenwart eines Lösungsmittels wie z. B. Aceton vorgenommen wird und anschließend dann mit z. B. wässrigem Medium weiter gegebenenfalls unter Dispersionsbildung verdünnt wird, wonach gegebenenfalls das Aceton mehr oder weniger auch noch wieder abgezogen werden kann.

Um noch eine gute Verarbeitbarkeit zu gewährleisten, sollten die Lösungen Feststoffgehalte unter 75 % besitzen, vorzugsweise zwischen 10 und 70 Gew.-% insbesondere zwischen 20 und 50 Gew.-%. Für Imprägnierungszwecke können gegebenenfalls stärkere Verdünnungen in Betracht kommen. Die Lösungen enthalten die Cyanursäureabkömmlinge zumeist in dispergierter Form.

Im einfachsten Falle werden sie durch Vermischen und Reaktion von Polyisocyanaten mit den phosphorhaltigen Kondensationsprodukten in so viel an Lösungsmittel, daß die Feststoffgehalte zwischen 10 und 95 Gew.-% insbesondere zwischen 20 und 70 Gew.-% liegen, gegebenenfalls unter Mitverwendung von Katalysatoren auf Basis z. B. von an sich bekannten Aminen, Phosphorverbindungen oder metallorganischen Verbindungen, in offenen oder geschlossenen Gefäßen hergestellt, oder die Umsetzungsprodukte werden nach der Herstellung falls möglich in den Lösungsmitteln aufgelöst. Eine Herstellung vor Ort zur Erzielung der gewünschten Ausbringungsform in situ ist ebenfalls in Betracht zu ziehen, desgleichen das Aufsprühen des Reaktionsgemisches mit oder ohne Zufuhr von Hilfsgas oder Wärme auf verschiedenste Träger.

Das Mischungsverhältnis ist in Bezug auf Reaktion des Polyisocyanates mit den korrespondierenden Gruppen des phosphorhaltigen Kondensationsproduktes zweckmäßigerweise unterstöchiometrisch zu wählen, hierbei sollten gegebenenfalls im Kondensationsprodukt enthaltende Anteile an Wasser mitberücksichtigt werden.

Hierbei bedeutet unterstöchiometrisch, daß wesentlich weniger an Kondensationsprodukt eingesetzt wird, als

den im Polyisocyanat vorhandenen Isocyanatgruppen entspricht. Im allgemeinen wird nicht mehr als 70 % der stöchiometrischen Menge an Kondensationsprodukt eingesetzt, vorzugsweise 15 bis 50 %. Das bedeutet, daß das Umsetzungsprodukt noch freie Isocyanatgruppen enthält, die in Gegenwart von Luftfeuchtigkeit oder sonstigen mit Isocyanaten reaktionsfähigen Verbindungen zumeist unter Vernetzung des gebildeten Lackfilmes noch weiter reagieren können, wodurch eine besonders gute Beständigkeit solcher Filme gegen Wasser und Chemikalien resultiert. Man kann die freien Isocyanatgruppen auch anteilig mit Amincarbonsäuren oder Aminosulfonsäuren, bzw. Aminen bzw. Polyaminen oder Aminopolyethern zur Umsetzung bringen, um so in wässrig-basischen wässrig-saurem oder neutralem Milieu leichter dispergierbare Umsetzungsprodukte zu erhalten.

Man kann die noch vorhandenen Isocyanatgruppen auch dazu verwenden, die Umsetzungsprodukte durch Zusatz von mit Isocyanaten reaktionsfähigen Polymeren, die z. B. OH-Gruppen oder COOH-Gruppen tragen, die Oligomeren (wie etwa Polyestern z. B. auf Adipinsäurebasis oder Caprolactonbasis, bzw. Polyethern z. B. auf Tetrahydrofuran-, Propylenoxid-, Epichlorhydrid- oder Ethylenoxid (-sulfid)-basis bzw. Mischformen solcher Materialien wie Polyetherestern, Polyester- oder Polyether-polycarbonaten) zu modifizieren, etwa in Richtung auf verbesserte Flexibilität oder Elastizität.

Die erfindungsgemäß verwendeten Beschichtungsmittel können den Charakter von mit Feuchtigkeit vernetzenden Einkomponentenlacken oder Fugenversiegelungsmassen besitzen.

Die lösungsmittelfreien Feststoffe bzw. aufgetrockneten Beschichtungen können gegebenenfalls thermoplastisch verformt und auch thermisch gehärtet bzw. vernetzt werden.

Die Beschichtungsmittel werden bevorzugt in Form ihrer Lösungen angewendet auf allen gegen Feuereinwirkung zu schützenden oder solchen Schutz vermittelnden Substraten z. B. durch Tränken, Tauchen, Anstreichen, Begießen, airless Sprühen, mit Luft zerstäuben, gegebenenfalls nach elektrostatischen oder sonstigen Beschichtungsverfahren. Die Auftragsmengen sind beliebig wählbar, obgleich Schichtdicken über 5 mm aus Gründen der Trocknung zu Schwierigkeiten führen können. Natürlich sind auch mehrfache Auftragsprozesse in Betracht zu ziehen.

Mit den Beschichtungsmitteln können Bau- und Konstruktionselemente wie Fassadenflächen, Dachflächen, Türen, Tore, Wandbreiche, Fußbodenflächen, Möbel, Behälter und Formteile beschichtet werden und natürlich auch sonstige Bau- und Konstruktionselemente, die dann in mit den Beschichtungsmitteln versehenem Zustand dem vorbeugenden Brandschutz dienen sollen.

Lösungsmittelfreie oder weitgehend lösungsmittelfreie erfindungsgemäße Zubereitungen können kittartige Konsistenz haben und dann als Fugenkitte und Dichtungsmittel mit Vernetzungsfähigkeit und Brandschutzeigenschaften verwendet werden.

So ist beispielsweise an die Herstellung von durch Beschichtung mit den erfindungsgemäßen Beschichtungsmitteln für den Brandschutz geeigneten flexiblen oder starren Folien, Furnieren, Geweben, Gewirken, Gestricken, Gelegen, Vliessen, Papieren, Pappen zu denken, die weiterhin zu Bedachungs-, Verkleidungs- oder Verfüllungszwecken konfektioniert und gegebenenfalls thermoplastisch oder spanabhebend verformt werden können, z. B. zu Dichtungsbändern und -Streifen, zu Brandschutzprofilen, zu Sandwichstapeln oder Isolierungen. Die erfindungsgemäßen Lösungen können auch als Klemstoffe oder im Brandfalle aktive werdende Zwischenschichten Verwendung finden. Auch die Beschichtung von Teilen bzw. ganzen Bereichen von Stahl-, Holz-, Kunststoff- oder Betonkonstruktionen im Hoch- oder Tiefbau ist in Betracht zu ziehen, wobei die gute Wasser- und damit Wetterstabilität von Bedeutung ist. Man kann auch massive oder porige oder hohle Körper jeder Größe beschichten und so als Elemente für den Brandschutz ausrüsten.

Im folgenden soll die Erfindung beispielhaft erläutert werden: die angegebenen Teile sind Gewichtsteile bzw. Gewichtsprozente, soweit nicht anderes vermerkt ist.

Als Polyisocyanate werden beispielhaft folgende Typen eingesetzt:

Polyisocyanat A: Technisches 4,4'-Diphenylmethandi-isocyanat mit einem Gehalt an Isomeren und ca. 10 % an höherfunktionellen Mehrkernanteilen. Isocyanatgehalt ca. 31 %.

Polyisocyanat B: Gleichartiges Isocyanat mit einem etwa doppelten Gehalt an höher kondensierten Anteilen, Isocyanatgehalt ca. 31 %.

Polyisocyonat C: Gleichartiges Isocyanat mit einem nochmals etwa verdoppelten Gehalt an höherkondensierten Anteilen. Isocyanatgehalt ca. 31 %.

Als phosphorhaltige Kondensationsprodukte zur Reaktion mit den Isocyanaten werden technische Produkte mit folgenden idealisierten Strukturen beispielhaft eingesetzt:

Kondensationsprodukt K:

$(C_2H_5O)_2POCH_2N(C_2H_4OH)_2$

Kondensationsprodukt L:

$(CH_3O)_2POCH_2N(C_3H_6OH)$ (Isopropyltyp)

Die Herstellung erfolgte, indem das Kondensationsprodukt, gegebenenfalls im Gemisch mit sonstigen Zusätzen, bei 15°C unter gutem Rühren mit dem Isocyanat vermischt, in eine verschließbare senkrechte Plattenform mit 1 cm Dicke, die auf 60°C vorgeheizt war, eingegossen und dort zur Abreaktion gebracht wurde. Nach 10 Minuten wurde dann entformt.

Die hergestellten Intumeszenzwerkstoffe sind im folgenden rezepturmäßig in tabellarischer Form aufgeführt:

| **Beispiel Nr.** | | 1 | 2 | 3 |
|---|---|---|---|---|
| Intumeszenzmaterial | | 1 | 2 | 3 |
| Isocyanat A | Gew.-Tle. | | | |
| Isocyanat B | " | 108 | | |
| Isocyanat C | | | 108 | 80 |
| Kondensationsprod. K | " | 100 | | 100 |
| Kondensationsprod. L | " | | 100 | |
| Raumgewicht g/m³ | | 0,90 | 0,93 | 0,92 |
| Intumeszenz 350°C | | 3 | 3 | 3 |
| Intumeszenz Flamme | | 2 | 2 | 2 |

*) M-F = Melamin/Formaldehyd
U-F = Harnstoff/Formaldehyd
**) als Melaminsalz (1 Mol Melamin; 0,75 Mol $H_3PO_4$)

Aus den hergestellten Intumeszenzplatten wurden Quader mit einer Kantenlänge von 1 cm geschnitten und in einen auf 350°C vorgeheizten Umluftschrank gebracht. Nach 30 Min. wurden die Prüflinge den Ofen entnommen und die Volumenzunahme festgestellt. Die Intumeszenzeigenschaft wurde wie folgt beurteilt:

| Volumenzunahme in % | Intumeszenz 350°C |
|---|---|
| über 500 | 1 |
| ca. 400 - 500 | 2 |
| ca. 300 - 400 | 3 |
| ca. 200 - 300 | 4 |
| unter 200 | 5 |

Die Beurteilung der Intumeszenzplatten 1 - 3 sind auf der Tabelle mit vermerkt. Desgleichen die Beurteilung der Intumeszenz an gleichartigen Würfeln mit Kantenlänge 0,5 cm, die auf einem Drahtnetz liegend von oben 3 Min. mit der entleuchteten Flamme eines Erdgas-Bunsenbrenners beaufschlagt wurden.

In allen Fällen verlöschten die Flammen an den Prüfkörpern unmittelbar nach Entfernung der Brennerflamme. Es hinterblieb ein nicht nachglühender Carbonisierungsschaum.

Das beobachtete Prüfergebnis war genau gleich, wenn die Prüfkörper zuvor bei Raumtemperatur (RT) in fließendem Wasser über 12 Tage gelagert, dann getrocknet und getestet wurden. Dieses Ergebnis zeigt die gute Wasserbeständigkeit der Intumeszenzplatten.

**Beispiel 4**

Zwei Schaumbetonplatten mit 10 cm Dicke, 24,5 cm Breite und 50 cm Höhe werden breitseitig so zusammengestellt, daß eine 10 x 50 x 50 cm Schaumbetonplatte mit einem senkrechten Schlitz von 1 cm Breite und 10 cm Tiefe entsteht. Dieser Schlitz wird nun beidseitig mit einem 1 cm breiten und 3 cm tiefen, sowie 50 cm hohen Streifen der nach den Rezepturen gemäß Beispiel 1 - 16 hergestellten Intumeszenzplatten ausgefüllt, so daß mittig noch ein 1 cm breiter, 4 cm tiefer und 50 cm hoher Luftspalt zwischen den Plattenteilen verbleibt.

Das so konstruierte Prüfelement befindet sich in einem Stahlrahmen und wird als Bauteil in die Wand eines Prüfofens (Kleinbrandkammer in Anlehnung an DIN 4102) eingebaut. Dann wird der prüfling einseitig mit einem Ölbrenner nach der Einheitstemperaturkurve gemäß DIN 4102 beaufschlagt, d.h. der Brandraum erreicht nach ca. 80 Min. 1 000°C.

In den Fällen der Versuche, wo die Streifen gemäß Beispiel 1 bis 3 eingelegt waren, war die Fuge zwischen den Schaumbetonplatten nach 90 Minuten noch nicht durchgebrannt und wies Temperaturen unter 100°C auf. In den Fällen, wo Streifen gemäß Beispiel 9 - 16 nebst Mineralwolle verwendet wurden, waren die Fugen nach 150 Min. noch nicht durchgebrannt und zeigten auf der feuerabgewandten Seite Temperaturen unter 120°C.

Hieraus ergibt sich die gute Eignung von Fugensicherungen mit dem erfindungsgemäßen Aufbau.

**Beispiel 5**

Es wird ein Gemisch hergestellt aus 100 Tlen techn. Melamin, 2 Tlen Eisenoxyd-Rotpigment und 100 Tlen techn. Kondensationsprodukt K. Dieses Gemisch wird mit 110 Tlen Isocyanat C mittels eines mechanischen

Laborrührgerätes 10 Sek intensiv verrührt und dann in eine auf 60°C beheizte Aluminiumform (Plattenform mit 1 cm Dicke des Formteils und 15 x 15 cm Kantenlänge) eingegossen. Als Trennmittel wurde ein handelsübliches Trennmittel auf Wachsbasis verwendet.

Nach 4 Minuten wurde die gebildete Platte aus der geschlossenen Plattenform entnommen. Die Platte (RG ca. 480 kg/$m^3$) hatte eine glatte Oberfläche und einen porösen Kern im Inneren d.h. eine Integralstruktur und war springhart. Aus dieser Platte wirden 3 cm breite Streifen geschnitten.

Die Hälfte der gesägten Streifen wurde 30 Tage unter Wasser bei RT gelagert, die andere Hälfte im normalen Innenraumklima. Bei der Wasserlagerung veränderte sich das Aussehen der Streifen nicht, nach dem Trocknen bei RT waren keine Unterschiede zu den trocken gelagerten Streifen zu erkennen. Auch bei Beaufschlagung mit einer Bunsenbrennerflamme zeigten beide Streifensorten das gleiche starke Intumeszenzverhalten mit Verlöschen der Flammen nach Entfernung des Bunsenbrenners.

In eine Schaumbetonwand von 10 cm Stärke wurden nun durchgängige Fugen mit 1,0 cm Breite geschnitten. Dann wurde in die Fugen von beiden Seiten der Wand je ein Streifen bündig mit der Wandoberfläche eingestellt bzw. festgeklemmt, so daß die Fuge optisch verschlossen war. Hierfür wurden sowohl Fugenschlüsse aus den wassergelagerten, wie auch den trocken gelagerten Mustern gefertigt. Es wurden auch jeweils Fugenverschlüsse gefertigt, bei denen der in den Fugen verbliebene Raum mit Mineralwolle lose gefüllt, bzw. ungefüllt war. Dann wurden die Wandstücke mit den Fugen in eine Kleinbrandkammer eingebaut und in Anlehnung an DIN 4102 nach der ETK beflammt. Die Beflammungsversuche wurden nach 140 Minuten abgebrochen. Bis dahin war keine der Fugen durchgebrannt, die Temperatur auf der dem Feuer abgewandten Seite hatte 92°C nicht überschritten, Innentemperatur 1100°C. Beim Öffnen der Fugen zeigte sich, daß sie total in den dafür freien Räumen mit Intumeszenzschaum gefüllt waren. Zwischen den Proben die im Wasser gelagert hatten und den Proben, die trocken gelagert waren, konnte kein wesentlicher Unterschied festgestellt werden.

**Beispiel 6**

Ein Gemisch aus 100 Tlen Kondensationsprodukt K, sowie 2,5 Tlen Chromoxyd-Grünpigment wird in einer 2-Komponenten-Sprühpistole mit 110 Tlen Isocyanat B vermischt und auf eine frisch gesandstrahlte Stahlplatte gesprüht. Die Stahlplatte hat eine Temperatur von 18°C und wird bei dem Ausrüstungsprozess etwa 8 mm dick beschichtet. Nach ca. 10 Minuten ist die Beschichtung erhärtet und klebfrei. Die Stahlplatte kann mit einer Metallsäge geschnitten werden, ohne daß die Beschichtung sich vom Stahl löst. Ein 10 cm breiter und 30 cm langer Streifen der beschichteten Stahlplatte wird 10 Tage zur Hälfte, d.h. ca. 15 cm tief in Wasser eingestellt und dann getrocknet. Zwischen der Beschichtung mit und ohne Wasserlagerung lassen sich optisch keine wesentlichen Unterschiede feststellen. Bei Beflammung mit einem Bunsenbrenner dessen Flamme auf die Beschichtung gerichtet ist lassen sich deutliche Unterschiede in der Entwicklung des Intumeszenzschaumes ebenfalls nicht feststellen.

Richtet man die Brennerflamme auf die Stahlplatte auf der nicht beschichteten Plattenseite, so bildet sich zwischen Beschichtung und Stahlplatte auf der Flammen abgewandten Seite eine isolierende Schicht aus Intumeszenzschaum, ohne daß die Beschichtung platzt, abschmilzt oder wegrutscht. Diese Eigenschaft macht derart ausgerüstete Bleche geeignet für den Einsatz als Feuerschutztüren oder -Wände mit im Brandfall entstehender Isolations- und Feuerschutzwirkung. Die Stahlplatte hatte eine Dicke von 0,9 mm.

**Beispiel 7**

In 1000 Tle. Methylenchlorid werden 1000 Tle. Isocyanat A gelöst, dann werden bei Rückflußtemperatur in 40 Minuten 400 Tle. Kondensationsprodukt L zugetropft. Man läßt noch 2,5 h am Rückfluß nachreagieren, dann läßt man abkühlen und erhält eine streichfähige Lacklösung: Muster 7a.

Weiterhin werden auf 1000 Tle. dieser Lösung 300 Tle. Salze Q zugesetzt und gut dispergiert: Muster 7b.

Die Beurteilung der Muster dieses Beispiels, wie der folgenden wird weiter unter zusammenfassend dargestellt.

**Beispiel 8**

In 1000 Tle. Isocyanat B in 500 Tle. Methylethylketon werden bei gutem Rühren 300 Tle. Kondensationsprodukt K in 60 Minuten eingetropft. Dabei steigt die Temperatur auf 80°C, man läßt abkühlen und setzt zu der fertigen Reaktionsflüssigkeit, die als solche eine streichfähige Konsistenz hat, 800 Tle. Methylethylketon, 400 Tle. Salz R, sowie 190 Tle. Silikathohlperlen mit einem Schüttgewicht von 250 g/l und Teilchendurchmesser zwischen 0,05 und 0,5 mm unter Rühren zu.

Man erhält ein spachtelfähiges Material: Muster 25a. Dieses wird in gegen Zutritt von Luft und Feuchtigkeit

verschlossenen Metallbehältern aufbewahrt.

**Beispiel 9**

In 1000 Tle. Methylenchlorid werden 1000 Tle. Isocyanat A gelöst, unter Rückfluß werden 400 Tle. Kondensationsprodukt K zugesetzt. Man läßt 2 h am Rückfluß, dann wird abgekühlt: Muster 9a.

Zu 100 Tle. der Lösung werden 10 Tle Salz A sowie 30 Tle. Salz S eingerührt: Muster 11b.

Zu 100 Tle. der Lösung werden 30 Tle. Salz T zugerührt; Muster 11c.

**Beispiel 10**

Zu 1000 Tle. Isocyanat C werden 400 Tle. Kondensationsprodukt K gelöst in 1000 Tle. Trichlorethylen gegeben. Man läßt 2 h bei 60°C rühren. 100 Tle. der abgekühlten Lösung werden mit 30 Tle. Salz R versetzt: Muster 10a.

**Beispiel 11**

Zu 1000 Tle. Methylenchlorid läßt man unter Rückfluß einlaufen: 1000 Tle. Isocyanat A und simultan 400 Tle Kondensationsprodukt K. Man läßt noch 3 h am Rückfluß und kühlt dann ab. Die Lösung wird als Muster 11a bezeichnet.

Zu 100 Tle. der Lösung werden 10 Tle. Diphenylkresylphosphat gerührt: Muster 11b. Zu 100 Tle. der Lösung werden 30 Tle. Salz R gerührt: Muster 11c.

Zu 100 Tle. der Lösung werden 30 Tle. Salz R und 25 Tle. Diphenylkresylphosphat geruht: Muster 11d.

**Beispiel 12**

Zu einer Dispersion von 600 Tle. Salz R in 1000 Tle. Methylenchlorid und 1000 Tle. Isocyanat A läßt man 400 Tle. Kondensationsprodukt K laufen und hält 2 h am Rückfluß. Dann läßt man abkühlen (Muster 15a) und setzt auf 100 Tle. der entstandenen Dispersion noch 8 Tle. Diphenylkresylphosphat und 2 Tle. Trioktylphosphat hinzu. Dann werden noch 5 Tle. Al-Oxid als Dispersionsstabilisator zugesetzt: Muster 12b.

Zur Begutachtung der Intumeszenzwirkung und der Wasserbeständigkeit der Intumeszenzeigenschaften wird wie folgt vorgegangen: Aus sämtlichen Mustern 24a bis 30b wird auf einem 0,5 mm starken Aluminiumblech, das zuvor entfettet wurde, ein Aufstrich gemacht, die ursprüngliche Schichtdicke vor dem Auftrocknen bei Raumtemperatur beträgt, etwa 0,9 mm. Für verschiedene Tests wurde jeweils ein Blech von 2 x 4 cm Länge beschichtet und geprüft. Das Auftrocknen erfolgte im Laufe einer 4-wöchigen Lagerung in normalem Raumklima bei RT.

Die Tests wurden nach folgender Vorbehandlung gemacht:

1,1 : keine besondere Vorbehandlung

2,2 : 24 h 120°C Lagerung

3,3 : 3-Tage-Lagerung in abfließendem Leitungswasser bei 55°C

4,4 : 2 Monate Bewitterung im Aprilklima Köln, Südwestlage.

Es wurden folgende Tests vorgenommen:

1. Die beschichteten getrockneten Platten wurden in einen 400°C Heizschrank gebracht und 1 h dort belassen. Dann wurde die erfolgte Expansion abgeschätzt. Dieser Test wird als Reizschranktest bezeichnet.

2. Beflammungstest: Die beschichtete trockene Metallplatte wird in horizontale Lage unter einem Winkel von ca. 45° mittig auf der Beschichtungsseite mit dem Kegel eine entleuchteten Erdgas-Bunsenbrennerflamme direkt beflammt. Die Flammeinwirkung wird 3 Minuten lang aufrechterhalten. Nach den ersten und zweiten 15 Sekunden und nach 60 Sekunden wird die Flamm kurz entfernt, um ein evtl. Nachbrennen festzustellen.

Die in den beiden Tests erreichte Expansion wird in Vol-% abgeschätzt.

Es wurden folgende allgemeine Beobachtungen gemacht:

- Der Weichmacherzusatz führt bei den Mustern 29b und 29d zu einer deutlichen Verbesserung der Flexibilität gegenüber den Mustern 29a bzw. 29c: Beim Knicken der Bleche erfolgt kein Sprödbruch.

- In den Tests 1,1 bis 4,4 wird keine auffallende Veränderung des Beschichtungsmaterials gegenüber den Nullproben (1,1) festgestellt, lediglich in 4,4 wird eine geringe Trübung, bei den anderen Proben sind Glanz und Festigkeit oder Farbe nicht merkbar verändert.

- Alle Muster sind nach dem Auftrocknen vernetzt und nicht mehr in den ursprünglichen Lösungsmitteln

löslich.

Die Vorbehandlung 1,1 bis 4,4 führen zu keinem ersichlichem Unterschied im Intumeszenzverhalten:

Im Heizschranktest wurde bei den Mustern 7b, 9b, 11d, 12b wurde eine Expansion zwischen 150 und auf mehr als 300 Vol-% beobachtet. Das spachtelfähige Muster 8a, das mehr wie eine Art Kunstharzputz verarbeitet werden kann, wurde in 5 mm Schichtdicke geprüft und expandierte im Beflammungstest um mehr als 500 Vol-%.

Ein kurzes Nachbrennen mit weniger als 5 Sek. Dauer wurde bei den Mustern 7a, 11b, und 12b festgestellt. Bei den anderen Mustern trat kein Nachbrennen auf.

Diese hier zusammenfassend dargestellten Test erläutern die gute Wasser- und Wetterbeständigkeit, sowie das Intumeszenzverhalten der erfindungsgemäßen Beschichtungs- bzw. Anstrichmittel.

**Beispiel 13**

Auf eine 1 $m^2$ große Holzbohlenplatte, die mit üblicher Bitumen-Dachpappe überzogen ist und ein sogenanntes Pappdach simuliert, wird in gleichmäßiger Schicht mittels Sprühpistole (airless) eine wie folgt hergestellte Beschichtungslösung aufgebracht: 500 Tle. Methylenchlorid, 500 Tle. Methylglykolacetat, 150 Tle. Diphenylkresylphosphat, 1000 Tle. Isocyanat A und 400 Tle. Salz R werden bei 50°C unter Rühren im Laufe von 30 Min. mit 400 Tle. Kondensationsprodukt K versetzt. Dann wird 2 h bei 50°C unter $N_2$ Feuchtigkeitsausschluß nachgerührt. Nach Abkühlen ist die Beschichtungslösung gebrauchsfertig.

Nach Aufsprühen dieser Beschichtungslösung wird im Freien abgetrocknet und nach 4 Wochen Bewitterung folgender Test unternommen:

Es werden folgende Beobachtungen gemacht:

Im Mittelbereich der wie beschrieben präparierten Dachfläche, die eine Neigung von 20° erhält, wird auf einer dem DIN A 4-Format entsprechenden Fläche 100 g Fichtenholzwolle aufgeschichtet. Das gleiche wird zum Vergleich mit einer unbehandelten Dachfläche vorgenommen. Dann werden gleichzeitig beide Holzwollebüschel entzündet.

Nach Abtrennen der Holzwolle ist auf dem behandelten Dachteil kein weiteres Brandgeschehen festzustellen, während bei der unbehandelten Dachfläche die gebildete Asche der Holzwolle als Docht für weiteres Brennen des in der Bitumenpappe enthaltenen organischen Materials wirkt.

Der Brand dauert noch ca. 10 Min. an und erfaßt auch Teile des Daches außerhalb der mittigen DIN A 4-Fläche, insbesondere die oberhalb gelegenen Teile, so daß ca. 35 % der Dachpappefläche durch Brandeinwirkung zerstört und Teile der Holzunterlage verkohlt werden. Beim behandelten Dach ist die Brandeinwirkung auf die DIN A 4-Fläche beschränkt geblieben und hat die Dachpappe nicht zerstört. Es hat sich vielmehr eine ca. 0,3 bis 1,5 cm in der Dicke schwankende Schicht von Intumeszenzschaum gebildet, unter der die Dachpappe und die Holzunterlage unversehrt erhalten geblieben sind, wenngleich die Pappe sich etwa wellig verformt hat. Das Dach ist beim Beregnungsversuch an der Brandstelle noch dicht.

**Beispiel 14**

Auf 1 $m^2$ Baumwoll-Segeltuch wird die analog Beispiel 13 hergestellte Beschichtungslösung aufgesprüht. Nach dem Auftrocknen bei 80°C im Umlufttrockner wird das noch etwas flexible beschichtete Gewebe wiederum auf eine mit Dachpappe gemäß Beispiel 13 vorgenommen. Das Ergebnis ist wiederum analog: Die Dachpappe ist durch das beschichtete Gewebe so gut gegen Brand- und Funkeneinwirkung geschützt, daß die Dachfläche nicht in Brand gerät und die Dachpappe nicht zerstört wird.

**Beispiel 15**

Auf ein Glasfaservliess von 1 m x 1 m werden 20 ml Wasser versprüht. Dann werden 1000 Tle. Lösung 10a aufgesprüht. Dann wird das beschichtete Vliess in eine Wellenpresse gebracht, dort bei 120°C 10 Min. ausgeheizt, dann entnommen und 3 Wochen gelagert. Man hat eine Wellplatte erhalten, die wasserdicht und entflammungswidrig ist, sie kann für Bedachungszwecke oder Fassadenverkleidungen benutzt werden. Bei Beflammung erfolgt lediglich eine Intumeszenzschaumbildung die die der Flammeinwirkung abgewandeten Bereiche isolierend schützt, ein Nachbrennen wird nicht beobachtet.

**Patentansprüche**

1. Konstruktionselemente mit gegen die Einwirkung von Wasser ausgezeichnet beständigen Intumeszenzeigenschaften für den vorbeugenden Brandschutz auf Basis intumeszierender Werkstoffe, hergestellt unter Formgebung in offenen oder geschlossenen Formen unter Verwendung von Intumeszenzwerkstoffen, die erhalten werden durch Umsetzung von
a) Polyisocyanaten mit
b) mindestens zwei Hydroxylgruppen aufweisenden phosphorhaltigen Kondensationsprodukten, erhältlich durch Kondensation von gegebenenfalls OH-Gruppen enthaltenden primaren oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
c) Cyanursäure und/oder Cyanursäurederivaten, gegebenenfalls
d) in Gegenwart von gegenüber dem Reaktionsgemisch inerten Hilfs- und Zusatzstoffen in offenen oder geschlossenen Formen.

2. Konstruktionselemente gemäß Anspruch 1 dadurch gekennzeichnet, daß als Polyisocyanate 1) solche verwendet werden, wie sie durch Anilin-Formaldehyd-Kondensation und anschließende Phosgenierung erhalten werden.

3. Konstruktionselemente gemäß Anspruch 1 und 2, daß durch gekennzeichnet, daß als mindestens zwei Hydroxylgruppen aufweisende Kondensationsprodukte 2) solche der Formel

$$(RO)_2PO\text{-}CH_2\text{-}N=(CHX\text{-}CHX\text{-}OH)_2$$

in der
R = $C_1$-$C_8$-Alkyl oder $C_1$-$C_8$-Hydroxyalkyl und
X = H oder Methyl bedeuten,
verwendet werden.

4. Konstruktionselemente nach Anspruch 1 - 3, dadurch gekennzeichnet, daß man als Cyanursäurederivate Melamin und/oder wasserunlösliche Melamin-Formaldehyd-Kondensate verwendet.

5. Konstruktionselemente gemäß Anspruch 1 - 4 aus Intumeszenzwerkstoffen mit Raumgewichten von 0,1 bis 1,0 g/$cm^3$.

6. Verwendung von Intumeszenzwerkstoffen, erhalten durch Umsetzung von
a) Polyisocyanaten mit
b) mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem, Oxalkylieren, und
c) Cyanursäure und/oder Cyanursäurederivaten, gegebenenfalls
d) in Gegenwart von gegenüber dem Reaktionsgemisch inerten Hilfs- und Zusatzstoffen
zur Herstellung von Konstruktionselementen mit gegen die Einwirkung von Wasser ausgezeichnet beständigen Intumeszenzeigenschaften für den vorbeugenden Brandschutz unter Formgebung in offenen oder geschlossenen Formen.

7. Verwendung von Intumeszenzwerkstoffen, erhalten durch Umsetzung von
a) Polyisocyanaten mit
b) mindestens zwei Hydroxylgruppen aufweisenden phosphorhaltigen Kondensationsprodukten, erhältlich durch Kondensation von gegebenenfalls OH-Gruppen erhaltenden primären oder sekunddären aliphatischen, cycloaliphatische, aromatischen, araliphatischen oder heterocyclischen Mono- und/oder Polyaminen, Carbonylverbindungen und Dialkylphosphiten, gegebenenfalls unter anschließendem Oxalkylieren, und
c) Cyanursäure und/oder Cyanursäurederivaten, gegebenenfalls
d) in Gegenwart von gegenüber dem Reaktionsgemisch inerten Hilfs- und Zusatzstoffen
zur Herstellung von Beschichtungen mit gegen die Einwirkung von Wasser ausgezeichnet beständigen Intumeszenzeigenschaften für den vorbeugenden Brandschutz.

8. Verwendung von Intumeszenzwerkstoffen gemäß Anspruch 7, dadurch gekennzeichnet, daß als Cyanursäurederivate Salze von Melamin mit Säuren des Phosphors mitverwendet werden.

**Claims**

1. Construction elements having intumescent properties which are outstandingly resistant to the effect of water, for preventive fire protection based on intumescent materials, produced with shaping in open or closed moulds using intumescent materials which are obtained by reacting
a) polyisocyanates with
b) phosphorus-containing, condensation products having at least two hydroxyl groups, obtainable by the condensation of optionally OH group- containing primary or secondary aliphatic, cycloaliphatic, aromatic, araliphatic or heterocyclic mono- and/or polyamines, carbonyl compounds and dialkyl phosphites, optionally

with subsequent oxalkylation, and

c) cyanuric acid and/or cyanuric acid derivatives, optionally

d) in the presence of auxiliaries and additives which are inert towards the reaction mixture, in open or closed moulds.

2. Construction elements according to claim 1, characterised in that polyisocyanates which are obtained by aniline-formaldehyde condensation and subsequent phosgenation are used as polyisocyanates 1).

3. Construction elements according to claim 1 and 2, characterised in that condensation products of the formula

$$(RO)_2PO\text{-}CH_2\text{-}N=(CHX\text{-}CHX\text{-}OH)_2$$

in which

R denotes $C_1$-$C_8$ alkyl or $C_1$-$C_8$ hydroxyalkyl, and

X denotes H or methyl

are used as condensation products 2) having at least two hydroxyl groups.

4. Construction elements according to claim 1 - 3, characterised in that melamine and/or water-insoluble melamine-formaldehyde condensates are used as cyanuric acid derivatives.

5. Construction elements according to claim 1 - 4 produced from intumescent materials having bulk densities of 0.1 to 1.0 g/cm$^3$.

6. Use of intumescent materials, obtained by the reaction of

a) polyisocyanates with

b) phosphorus-containing condensation products having at least two hydroxyl groups, obtainable by the condensation of optionally OH group-containing primary or secondary aliphatic, cycloaliphatic, aromatic, araliphatic or heterocyclic mono- and/or polyamines, carbonyl compounds and dialkyl phosphites, optionally with subsequent oxalkylation, and

c) cyanuric acid and/or cyanuric acid derivatives, optionally

d) in the presence of auxiliaries and additives which are inert towards the reaction mixture for the production of construction elements having intumescent properties which are outstandingly resistant to the effect of water, for preventive fire protection, with shaping in open or closed moulds.

7. Use of intumescent materials, obtained by the reaction of

a) polyisocyanates with

b) phosphorus-containing condensation products having at least two hydroxyl groups, obtainable by the condensation of optionally OH group-containing primary or secondary aliphatic, cycloaliphatic, aromatic, araliphatic or heterocyclic mono- and/or polyamines, carbonyl compounds and dialkyl phosphites, optionally with subsequent oxalkylation, and

c) cyanuric acid and/or cyanuric acid derivatives, optionally

d) in the presence of auxiliaries and additives which are inert towards the reaction mixture for the production of coatings having intumescent properties which are outstandingly resistant to the effect of water, for preventive fire protection.

8. Use of intumescent materials according to claim 7, characterised in that salts of melamine with acids of phosphorus are simultaneously used as cyanuric acid derivatives.

**Revendications**

1. Eléments de construction doués de propriétés d'intumescence d'une très bonne stabilité à l'action de l'eau, pour la protection contre l'incendie, à base de matériaux intumescents, réalisés par formage dans des moules ouverts ou fermés en utilisant des matériaux intumescents qui sont obtenus par réaction

a) de polyisocyanates avec

b) des produits de condensation contenant du phosphore, porteurs d'au moins deux groupes hydroxyle, pouvant être obtenus par condensation de mono-amines et/ou de polyamines aliphatiques, cycloaliphatiques, aromatiques, araliphatiques ou hétérocycliques primaires ou secondaires contenant éventuellement des groupes OH, de composés carbonyliques et de phosphites de dialkyle, suivie le cas échéant d'une oxalkylation, et

c) d'acide cyanurique et/ou de dérivés d'acide cyanurique, éventuellement

d) en présence d'adjuvants et d'additifs inertes vis-à-vis du mélange réactionnel, dans des moules ouverts ou fermés.

2. Eléments de construction suivant la revendication 1, caractérisés en ce qu'on utilise comme polyisocyanates 1) des composés qui sont obtenus par condensation aniline-formaldéhyde suivie d'une phosgénation.

3. Eléments de construction suivant les revendications 1 et 2, caractérisés en ce qu'on utilise comme produits de condensation 2) portant au moins deux groupes hydroxyle, des produits de formule

$$(RO)_2PO\text{-}CH_2\text{-}N=(CHX\text{-}CHX\text{-}OH)_2$$

dans laquelle
R est un groupe alkyle en $C_1$ à $C_8$ ou hydroxyalkyle en $C_1$ à $C_8$ et
X représente H ou le groupe méthyle.

4. Eléments de construction suivant les revendications 1 à 3, caractérisés en ce qu'on utilise comme dérivés d'acide cyanurique la mélamine et/ou des produits de condensation mélamine-formaldéhyde insolubles dans l'eau.

5. Eléments de construction suivant les revendications 1 à 4 en matériaux intumescents ayant des masses volumiques de 0,1 à 1,0 g/$cm^3$.

6. Utilisation de matériaux intumescents obtenus par réaction
a) de polyisocyanates avec
b) des produits de condensation contenant du phosphore, portant au moins deux groupes hydroxyle, pouvant être obtenus par condensation de mono-amines et/ou de polyamines aliphatiques, cycloaliphatiques, aromatiques, araliphatiques ou hétérocycliques primaires ou secondaires contenant éventuellement des groupes OH, de composés carbonyliques et de phosphites de dialkyle, éventuellement suivie d'une oxalkylation, et
c) d'acide cyanurique et/ou de dérivés d'acide cyanurique, éventuellement
d) en présence d'adjuvants et d'additifs inertes vis-à-vis du mélange réactionnel
pour la production d'éléments de construction doués de propriétés d'intumescence de très bonne stabilité à l'action de l'eau pour la lutte préventive contre l'incendie, avec formage dans des moules ouverts ou fermés.

7. Utilisation de matériaux intumescents obtenus par réaction
a) de polyisocyanates avec
b) des produits de condensation contenant du phosphore, présentant au moins deux groupes hydroxyle, pouvant être obtenus par condensation de mono-amines et/ou de polyamines aliphatiques, cycloaliphatiques, aromatiques, araliphatiques ou hétérocycliques primaires ou secondaires contenant éventuellement des groupes OH, de composés carbonyliques et de phosphites de dialkyle, éventuellement suivie d'une oxalkylation, et
c) d'acide cyanurique et/ou de dérivés d'acide cyanurique, éventuellement
d) en présence d'adjuvants et d'additifs inertes vis-à-vis du mélange réactionnel
pour la réalisation de revêtements doués de propriétés d'intumescence ayant une très bonne stabilité à l'action de l'eau, pour la lutte préventive contre l'incendie.

8. Utilisation de matériaux intumescents suivant la revendication 7, caractérisée en ce qu'on utilise comme dérivés d'acide cyanurique des sels de mélamine avec des acides du phosphore.